# EUROPEAN PATENT APPLICATION

(11) **EP 4 343 628 A1**
(43) Date of publication of application: **27.03.2024**
(21) Application number: 22197131.0
(22) Date of filing: 22.09.2022
(51) Int. Cl.: G06N 3/0464, G06N 3/096, G06N 3/09, G06T 7/00, G06N 3/082

(54) **METHOD AND SYSTEM FOR VALIDATING CLEANLINESS OF MACHINE PARTS IN AN INDUSTRIAL PLANT**

(71) Applicant: Siemens Aktiengesellschaft, 80333 München (DE)
(72) Inventor: Madhavan, Saravanan, 643211 Nilgiris, TamilNadu (IN); Pai, Sriram, 560092 Bengaluru, Karnataka (IN); C, Basavaraj, 560040 Bengaluru, Karnataka (IN)
(74) Representative: Isarpatent

(57) **Abstract**

The present invention provides a method and system for validating cleanliness of machine parts in an industrial plant. The method comprises determining, by a processing unit, a neural network which is trained to determine whether dirt is present on one or more machine parts based on the analysis of the one or more images. The method further comprises modifying a plurality of weights of the neural network to generate a plurality of versions of the neural network. The method further comprises receiving an image of a machine part in an industrial plant. The method further comprises determining, by the processing unit, whether dirt is present in the machine part, by application of the optimum version of the neural network model. The method further comprises validating, by the processing unit, a cleanliness of the machine part based on a determination that dirt is not present on the machine part.

## Description

The present invention relates to a field of industrial automation, and more particularly relates to a method and system for validating cleanliness of machine parts in an industrial plant.

A industrial plant such as an industrial plant comprises a plurality of machine parts which function together to achieve an objective. Examples of the plurality of machine parts includes but is not limited to valves, containers, sensors, agitators, vortex breakers, nozzles, fittings, positioners, and pipes. In industries such as chemical, pharmaceutical, food, and beverage industries, the plurality of machine parts carry a large variety of chemicals. In some examples, a single machine part is used to handle different types of chemicals, one after the other. Thus, to avoid contamination between chemicals, the machine part has to be cleaned properly before each use. Furthermore, cleanliness of the machine part is to be validated before each use.

In one example, a technician sprays a layer of riboflavin on a machine part to detect presence of contaminants on the machine part. For example, the layer of riboflavin highlights organic impurities present on the machine part, with a specific color. Thus, the technician is enabled to detect the organic impurities by sight. However, existing validation methods are largely manually performed and are thus prone to human errors.

In light of above, there exists a need for an efficient and cost effective method and system for automatic validation of cleanliness of machine parts in an industrial plant. Therefore, it is an object of the present invention to provide a method and system for automatic validation of cleanliness of machine parts in an industrial plant.

The object of the invention is achieved by a method for automatic validation of cleanliness of machine parts in an industrial plant. The industrial plant comprises a plurality of machine parts which function together to achieve an objective. Examples of the plurality of machine parts includes but is not limited to valves, containers, sensors, agitators, vortex breakers, nozzles, fittings, positioners, and pipes. The industrial plants are of a plurality of types such as a chemical industrial plant and a pharmaceutical industrial plant. Each of the plurality of machine part handles a variety of substances such as industrial chemicals, food materials, and pharmceutical substances.

In a preferred embodiment, the method comprises determining, by a processing unit, a neural network which is trained to analyze one or more images of one or more machine parts. The neural network is one of a convolutional neural network, image recognition neural network and a deep neural network. The neural network is determined from a plurality of neural networks which are stored in a memory such as a database server. In one example, each of the plurality of neural networks is trained to analyze images of a specific type of machine part. For example, a first neural network is trained to analyze images of a machine part such as a nozzle. Similarly, a second neural network is trained to analyze images of a machine part such as a pipe. In such a case, the processing unit is configured to receive an input which indicates that a type of the one or more machine part. In a case where the type of the machine part is a nozzle, then the first neural network is determined from the plurality of neural networks. In one example, the neural network is a pattern recognition neural network configured to detect specific patterns and shapes, in the one or more images, which is indicative of dirt. Advantageously, the presence of dirt is determined automatically by the neural network without manual intervention. Thus, manual labour and efforts and consequently, risk of manual error is reduced.

The neural network is further trained to determine whether dirt is present on one or more machine parts based on the analysis of the one or more images. Dirt indicates presence of contaminants on the one or more machines. Examples of contaminants include chemicals, bacterial cultures, solid waste particles, and obstructions in the one or more machine parts. The neural network is trained by receiving, by the processing unit, a training data set. The training data set is received from a data repository such as a database server.

The training data set comprises a plurality of labels and a plurality of images of the one or more machine parts. Each of the plurality of labels is indicative of whether a machine part, in a specific image of the plurality of images, has a presence of dirt. The plurality of images further comprises images of dirt, such as chemicals, bacterial cultures, solid waste particles, and obstructions in the one or more machine parts.

The method further comprises training, by the processing unit, the neural network by application of one of a supervised learning algorithm or an unsupervised learning algorithm on the training data set. The neural network is trained to determine presence of dirt on the one or more machine parts by analysis of the plurality of images.

In one example, the one or more images comprises the one or more machine parts. Furthermore, the neural network comprises a plurality of layers. Each of the plurality of layers comprises a plurality of weights. The plurality of layers are arranged sequentially. Each of the plurality of layers comprises a plurality of neurons.

The method further comprises determining, by the processing unit, a middle layer from the plurality of layers of the neural network. In one example, the middle layer is a layer which is present in a middle of the plurality of layers. The method further comprises determining, by the processing unit, a first layer and a second layer from the plurality of layers. The first layer is prior to the middle layer and the second layer is subsequent to the middle layer. In a case where the middle layer is an Mth layer, where M is an integer, the first layer is the (M-1)th layer and the second layer is the (M+1)th layer.

For example, in a case where the plurality of layers have 11 layers, the middle layer is the 6th layer. Furthermore the first layer is a 5th layer and the second layer is a 7th layer.

The method further comprises modifying, by the processing unit, the plurality of weights by exchanging one or more weights of the first layer of the plurality of layers with one or more weights of the second layer of the plurality of layers. In one example, a set of weights present in a first half of the plurality of neurons in the first layer is replaced with a set of weights which are present in a second half of the plurality of neurons in the second layer of the plurality of layers. Similarly, a set of weights present in a second half of the plurality of neurons in the first layer is replaced with a set of weights which are present in a first half of the plurality of neurons in the second layer of the plurality of layers. Thus, the plurality of weights of the neural network are modified to generate a new version of the neural network.

In another example, a set of weights present in a first half of the plurality of neurons in the second layer is replaced with a set of weights which are present in a second half of the plurality of neurons in the first layer of the plurality of layers. Similarly, a set of weights present in a second half of the plurality of neurons in the second layer is replaced with a set of weights which are present in a first half of the plurality of neurons in the first layer of the plurality of layers. Thus, the plurality of weights of the neural network are modified to generate a new version of the neural network.

In yet another example, the plurality of weights of the first layer and the second layer are randomized to generate a new version of the neural network. Thus the method further comprises generating, by the processing unit, a plurality of versions of the neural network based on the modification of the plurality of weights. Thus in other words, the method comprises modifying, by the processing unit, the plurality of weights of the neural network to generate a plurality of versions of the neural network. The plurality of weights associated with each version of the plurality of versions are different from each other.

The method further comprises applying, by the processing unit, each version of the neural network on a random test data set. The random data set is stored in a memory such as the database server. In one example, the random data set comprises the training data set. The version of the neural network processes the random test data to generate an output parameter. The output parameter is a data item generated by the version of the neural network, after processing the random dataset. In one example, the output parameter is a number of dirty spots detected by the version of the neural network, when the version of the neural network processes an image of a machine part. For example, in a case where the version detects 9 dirty spots in the image, then the output parameters is a number variable with a value 9. Other examples of the output parameter includes a time taken by the version to detect the dirty spots, a memory requirement of the version, and a value which indicates an accuracy of the version. The method further comprises determining, by the processing unit, the output parameter of each version of the plurality of versions based on the application of the version on the random test data set.

In one example, a user is enabled to set a threshold for the output parameter. Examples of the threshold includes a threshold for a number of dirty spots detected by the version of the neural network, a threshold for a time taken by the version to detect the dirty spots, a threshold for a memory requirement of the version, and a threshold for a value which indicates an accuracy of the version. In one example, the threshold is a threshold of number of dirty spots detected by the version. In such a case, the threshold is a numerical variable with an integer value, such as 5.

The method further comprises comparing, by the processing unit, the determined output parameter with the user defined threshold. The method further comprises validating, by the processing unit, the version of the neural network based on a result of the comparison. In one example, the output parameter is indicative of a number of spots detected by the version in an image which has 9 dirty spots. In a case where the version has detected 7 dirty spots in the image, then a value of the output parameter is 7. In the example, the user has set the threshold top be 6. In such a case, the processing unit compares the output parameter to the threshold to determine that the output parameter is greater than the threshold. In the example, the processing unit validates the version of the neural network based on the determination that the output parameter is greater than the threshold.

The method further comprises determining, by the processing unit, an output parameter for each version of the plurality of versions based on the application of the version on the random test data set. The method further comprises ranking, by the processing unit, the plurality of versions based on the determined output parameter for each version. In one example, the plurality of versions of the neural network are ranked in increasing order. In another example, the plurality of versions of the neural network are ranked in decreasing order.

The method further comprises determining, by the processing unit, a version which has the highest rank as the optimal version of the plurality of versions. In another example, the method comprises determining, by the processing unit, any version of the plurality of versions of the neural network as the optimal version of the neural network.

The method further comprises modifying the neural network based on the optimum version of the plurality of versions of the neural network by application of a transfer learning algorithm on the neural network and the optimum version of the plurality of versions of the neural network. Examples of the transfer learning algorithms include, but is not limited to a google inception model, a Microsoft Restnet model, and an Oxford VCG model transfer learning algorithm. In other words, the method comprises validating, by the processing unit, each of the plurality of versions of the neural network model to determine an optimum version of the neural network. Advantageously, the plurality of weights of the neural network are frequently modified, tested and validated to generate the optimum version of the neural networks. Thus, problems caused by model drift is reduced. Furthermore, the neural network is enabled to function at optimum efficiency to determine the presence of dirt on the one or more machine parts.

The method further comprises spraying, by the processing unit via a spraying device, a riboflavin solution on the machine part. Examples of the spraying devices includes valves, guns, and nozzles. The method further comprises capturing, by the processing unit via an imaging device, an image of the machine part. Examples of the imaging device includes a camera, and an ultraviolet camera. The method further comprises receiving the image of the machine part from the imaging device. The method further comprises analyzing the image of the machine part to determine the presence of dirt on the machine part. The presence of the dirt is determined by application of the optimum version of the neural network on the received image. The method further comprises notifying a user about the determined presence of the dirt on the machine part. The user is notified via one the plurality of human machine interfaces. The user may be notified via one of a voice notification, a text notification, or a visual notification.

The method further comprises determining, by the processing unit, an amount of dirt on the machine part based on the application of the optimum version on the received image. In one example, the optimum version of the neural network determines the amount of dirt by detecting the total number of dirty spots in the received image. A dirty spot is a portion of the received image wherein presence of dirt or contaminants have been determined by the optimum version of the neural network.

The method further comprises classifying, by the processing unit, the machine part into one of a clean category, a partially clean category and a clean category based on the determined amount of dirt on the machine part. The processing unit is configured to notify the user of a classification of the machine part. Advantageously, the user is enabled to take one or more steps to clean the dirt based on the classification of the machine part.

The method further comprises initiating, by the processing unit, a cleaning process to clean the machine part based on the determination that the dirt is present on the machine part. In one example, the cleaning process is one of a manual or an automatic cleaning process.

In other words, the method comprises determining, by the processing unit, whether dirt is present in the machine part, by application of the optimum version of the neural network model on the received image. The method further comprises validating, by the processing unit, a cleanliness of the machine part based on a determination that dirt is not present on the machine part.

The object of the present invention is also achieved by an industrial control system for validating cleanliness of a machine part in an industrial plant. The industrial control system comprises a processing unit and a memory coupled to the processing unit. The memory comprises a cleaning validation module stored in the form of machine-readable instructions executable by the processor. The cleaning validation module is configured for performing the method as described above.

The object of the present invention is also achieved by an industrial environment. The industrial environment comprising an industrial control system, a industrial plant comprising one or more physical components and a plurality of human machine interfaces communicatively coupled to the industrial control system and the industrial plant. The industrial control system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of validating cleanliness of a machine part in an industrial plant, according to an embodiment of the present invention;
- FIG 2: is a block diagram of an industrial control system, such as those shown in FIG. 1, in which an embodiment of the present invention can be implemented;
- FIG 3: is a block diagram of a cleaning validation module, such as those shown in FIG 2, in which an embodiment of the present invention can be implemented;
- FIG 4A-C: is a process flowchart illustrating an exemplary method of validating cleanliness of a machine part in an industrial plant, according to an embodiment of the present invention;

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

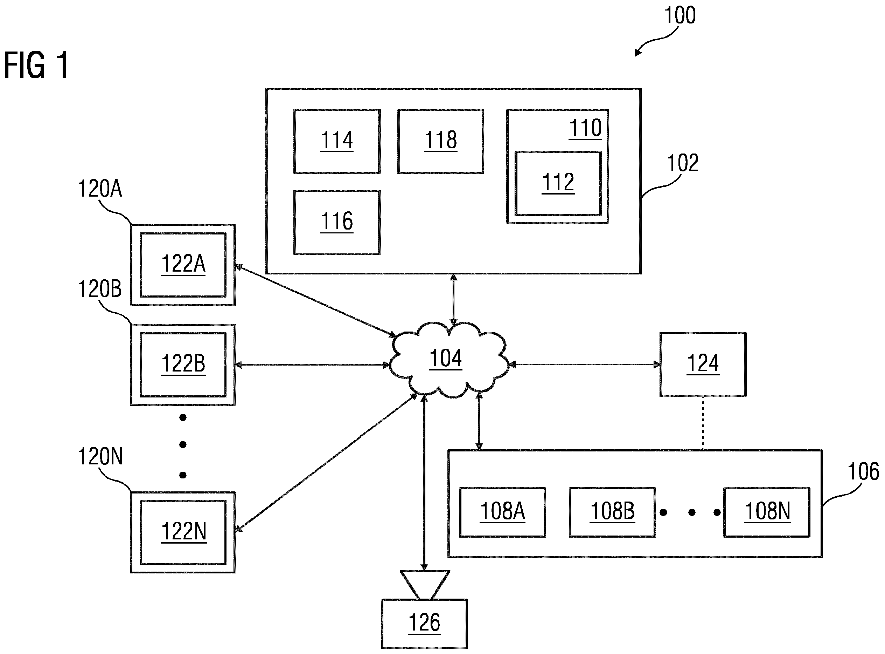

FIG 1 is a block diagram of an industrial environment 100 capable of validating cleanliness of a machine part in an industrial plant 106, according to an embodiment of the present invention. In FIG 1, the industrial environment 100 includes an industrial control system 102, the industrial plant 106 and a plurality of human machine interfaces 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the industrial plant 106 via a network connection 104 (such as Local Area Network (LAN), Wide Area Network (WAN), Wi-Fi, Internet, any short range or wide range communication). The industrial control system 102 is also connected to the plurality of human machine interfaces 120A-N via the network connection 104.

The industrial plant 106 comprises a plurality of machine parts 108A-N. Examples of the plurality of machine parts 108A-N includes but is not limited to valves, containers, sensors, agitators, vortex breakers, nozzles, fittings, positioners, and pipes. In industries such as chemical, pharmaceutical, food, and beverage industries, the plurality of machine parts 108A-N carry a large variety of chemicals. In some examples, a single machine part, such as a vessel, is used to handle different types of chemicals, one after the other. Thus, small amounts of the chemicals handled by the machine part deposits on the machine part. The deposits of the handled chemicals contaminates any other chemical handled by the machine part. Thus, the deposits of the chemicals manifest as dirt on the machine part.

Although, FIG 1 illustrates the industrial control system 102 connected to one industrial plant 106, one skilled in the art can envision that the industrial control system 102 can be connected to several industrial plants located at different geographical locations via the network connection 104.

The plurality of human machine interfaces 120A-N may be a desktop computer, laptop computer, tablet, smart phone and the like. Each of the plurality of human machine interfaces 120A-N is provided with an engineering tool 122A-N for controlling the industrial control system 102. The plurality of human machine interfaces 120A-N can access the industrial control system 102 for automatically generating engineering programs. The plurality of human machine interfaces 120A-N can access cloud applications. Throughout the specification, the terms "human machine interface", "client device" and "user device" are used interchangeably. The plurality of human machine interfaces 120A-N are further configured to receive a plurality of user actions from a plurality of users. The plurality of user actions comprises user inputs, user commands, user gestures, programming instructions, and user passwords.

It is noted that the industrial control system 102 is connected to a spraying device 124 and an imaging device 126. Examples of the spraying device 124 includes valves, guns, and nozzles. Examples of the imaging device 126 includes a camera, and an ultraviolet camera. The spraying device 124 is configured to spray a riboflavin solution on one of the plurality of machine parts 108A-N. In another example, the spraying device 124 is configured to spray a cleaning agent on the plurality of machine parts 108A-N to clean the dirt off the plurality of machine parts 108A-N.

The industrial control system 102 may be a standalone server deployed at a control station or may be a remote server on a cloud computing platform. In a preferred embodiment, the industrial control system 102 may be a cloud-based industrial control system. The industrial control system 102 is capable of delivering applications (such as cloud applications) for validating cleanliness of the plurality of machine parts 108A-N. The industrial control system 102 may comprise a digitalization platform 110 (such as a cloud computing platform), a cleanliness validation module 112, a server 114 including hardware resources and an operating system (OS), a network interface 116 and a database 118. The network interface 116 enables communication between the industrial control system 102, the industrial plant 106, the plurality of human machine interfaces 120A-N, and the plurality of machine parts 108A-N.

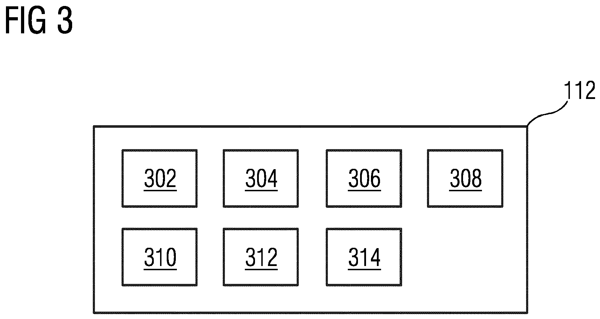

The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the servers 114 and delivers the aforementioned services using the application programming interfaces deployed therein. The digitalization platform 110 may comprise a combination of dedicated hardware and software built on top of the hardware and the OS. In an exemplary embodiment, the digitalization platform 110 may correspond to an Integrated Development Environment (IDE) comprising program editors and compilers which allow the users of the plurality of human machine interfaces 120A-N to generate engineering programs. The digitalization platform 110 may further comprise the cleanliness validation module 112 configured for validating cleanliness of the plurality of machine parts 108A-N. Details of the cleanliness validation module 112 is explained in FIG. 3.

The database 118 stores the information relating to the industrial plant 106, the plurality of machine parts 108A-N, the plurality of human machine interfaces 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the digitalization platform 110. The database 118, according to another embodiment of the present invention, is a location on a file system directly accessible by the cleanliness validation module 112.

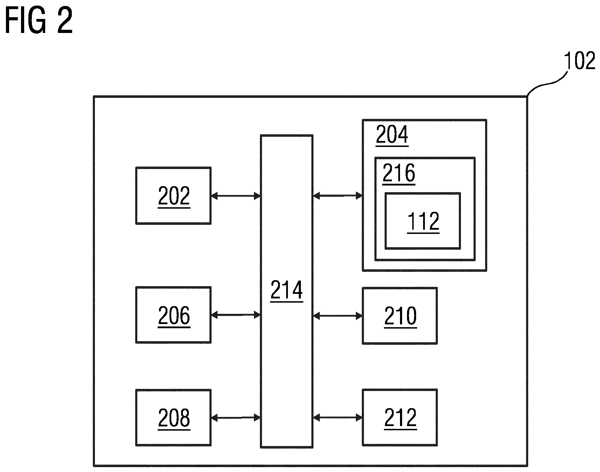

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, a neural processing unit (NPU) or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the cleanliness validation module 112 stored in the form of machine-readable instructions on any of the above-mentioned storage media and may be in communication with and executed by the processor(s) 202.

When executed by the processing unit 202, the cleanliness validation module 112 causes the processing unit 202 to train a neural network to analyze one or more images of one or more machine parts of the plurality of machine parts 108A-N, and detect a presence of dirt on the one or more machine parts. The dirt may be any chemical, biological or metallic contaminant on the one or more machine parts which may adversely affect a quality of one or more chemicals handled by the one or more machine parts. In one example, the one or more machine parts is configured to handle medicines. The dirt on the one or more machine parts may be chemical substances which may reduce an efficacy of the handled medicines. Examples of dirt includes chemicals, bacterial cultures, solid waste particles, and obstructions in the one or more machine parts. The neural network is trained by receiving, by the processing unit, a training data set. The training data set is received from a data repository such as a database server.

The training data set comprises a plurality of labels and a plurality of images of the one or more machine parts. Each of the plurality of labels is indicative of whether a machine part, in a specific image of the plurality of images, has a presence of dirt. The plurality of images further comprises images of dirt, such as chemicals, bacterial cultures, solid waste particles, and obstructions in the one or more machine parts.

When executed by the processing unit 202, the cleanliness validation module 112 further causes the processing unit 202 to train the neural network by application of one of a supervised learning algorithm or an unsupervised learning algorithm on the training data set. The neural network is trained to determine presence of dirt on the one or more machine parts by analysis of the plurality of images. In one example, the neural network is a pattern recognition neural network configured to detect specific patterns and shapes, in the plurality of images, which is indicative of dirt.

The neural network is one of a convolutional neural network, image recognition neural network and a deep neural network. In one example, the neural network is determined from a plurality of neural networks which are stored in a memory such as the server 114. In one example, each of the plurality of neural networks is trained to analyze images of a specific type of machine part. For example, a first neural network is trained to analyze images of a machine part such as a nozzle. Similarly, a second neural network is trained to analyze images of a machine part such as a pipe. In such a case, the processing unit 202 is configured to receive an input which indicates that a type of the one or more machine part. In a case where the type of the machine part is a nozzle, then the first neural network is determined from the plurality of neural networks.

In one example, the one or more images comprises the one or more machine parts. Furthermore, the neural network comprises a plurality of layers. Each of the plurality of layers comprises a plurality of weights. The plurality of layers are arranged sequentially. Each of the plurality of layers comprises a plurality of neurons.

The cleanliness validation module 112 further causes the processing unit 202 to determine a middle layer from the plurality of layers of the neural network. In one example, the middle layer is a layer which is present in a middle of the plurality of layers. The cleanliness validation module 112 further causes the processing unit 202 to determine a first layer and a second layer from the plurality of layers. The first layer is prior to the middle layer and the second layer is subsequent to the middle layer. In a case where the middle layer is an Mth layer, where M is an integer, the first layer is the (M-1)th layer and the second layer is the (M+1)th layer.

For example, in a case where the plurality of layers have 11 layers, the middle layer is the 6th layer. Furthermore the first layer is a 5th layer and the second layer is a 7th layer.

The cleanliness validation module 112 further causes the processing unit 202 to modify the plurality of weights to generate a plurality of versions of the neural network. For example, the plurality of weights are modified by exchanging one or more weights of the first layer of the plurality of layers with one or more weights of the second layer of the plurality of layers. In one example, a set of weights present in a first half of the plurality of neurons in the first layer is replaced with a set of weights which are present in a second half of the plurality of neurons in the second layer of the plurality of layers. Similarly, a set of weights present in a second half of the plurality of neurons in the first layer is replaced with a set of weights which are present in a first half of the plurality of neurons in the second layer of the plurality of layers. Thus, the plurality of weights of the neural network are modified to generate a new version of the neural network.

In another example, a set of weights present in a first half of the plurality of neurons in the second layer is replaced with a set of weights which are present in a second half of the plurality of neurons in the first layer of the plurality of layers. Similarly, a set of weights present in a second half of the plurality of neurons in the second layer is replaced with a set of weights which are present in a first half of the plurality of neurons in the first layer of the plurality of layers. Thus, the plurality of weights of the neural network are modified to generate a new version of the neural network.

In yet another example, the plurality of weights of the first layer and the second layer are randomized to generate a new version of the neural network. The cleanliness validation module 112 further causes the processing unit 202 to generate a plurality of versions of the neural network based on the modification of the plurality of weights. Thus in other words, the method comprises modifying, by the processing unit, the plurality of weights of the neural network to generate a plurality of versions of the neural network. The plurality of weights associated with each version of the plurality of versions are different from each other.

The cleanliness validation module 112 further causes the processing unit 202 to apply each version of the neural network on a random test data set. The random data set is stored in a memory such as the database server. In one example, the random data set comprises the training data set. The version of the neural network processes the random test data to generate an output parameter. The output parameter is a data item generated by the version of the neural network, after processing the random dataset. In one example, the output parameter is a number of dirty spots detected by the version of the neural network, when the version of the neural network processes an image of a machine part. For example, in a case where the version detects 9 dirty spots in the image, then the output parameters is a number variable with a value 9. Other examples of the output parameter includes a time taken by the version to detect the dirty spots, a memory requirement of the version, and a value which indicates an accuracy of the version. The cleanliness validation module 112 further causes the processing unit 202 to determine the output parameter of each version of the plurality of versions based on the application of the version on the random test data set.

In one example, a user is enabled to set a threshold for the output parameter. Examples of the threshold includes a threshold for a number of dirty spots detected by the version of the neural network, a threshold for a time taken by the version to detect the dirty spots, a threshold for a memory requirement of the version, and a threshold for a value which indicates an accuracy of the version. In one example, the threshold is a threshold of number of dirty spots detected by the version. In such a case, the threshold is a numerical variable with an integer value, such as 5.

The cleanliness validation module 112 further causes the processing unit 202 to compare the determined output parameter with the user defined threshold. The cleanliness validation module 112 further causes the processing unit 202 to validate the version of the neural network based on a result of the comparison. In one example, the output parameter is indicative of a number of spots detected by the version in an image which has 9 dirty spots. In a case where the version has detected 7 dirty spots in the image, then a value of the output parameter is 7. In the example, the user has set the threshold top be 6. In such a case, the processing unit 202 compares the output parameter to the threshold to determine that the output parameter is greater than the threshold. In the example, the processing unit 202 validates the version of the neural network based on the determination that the output parameter is greater than the threshold.

The cleanliness validation module 112 further causes the processing unit 202 to determine an output parameter for each version of the plurality of versions based on the application of the version on the random test data set. The cleanliness validation module 112 further causes the processing unit 202 to rank the plurality of versions based on the determined output parameter for each version. In one example, the plurality of versions of the neural network are ranked in increasing order. In another example, the plurality of versions of the neural network are ranked in decreasing order.

The cleanliness validation module 112 further causes the processing unit 202 to determine a version which has the highest rank as the optimal version of the plurality of versions. In another example, the cleanliness validation module 112 further causes the processing unit 202 to determine any version of the plurality of versions of the neural network as the optimal version of the neural network.

The cleanliness validation module 112 further causes the processing unit 202 to modify the neural network based on the optimum version of the plurality of versions of the neural network by application of a transfer learning algorithm on the neural network and the optimum version of the plurality of versions of the neural network. Examples of the transfer learning algorithms include, but is not limited to a google inception model, a Microsoft Restnet model, and an Oxford VCG model transfer learning algorithm. In other words, the cleanliness validation module 112 further causes the processing unit 202 to validate each of the plurality of versions of the neural network model to determine the optimum version of the neural network.

The cleanliness validation module 112 further causes the processing unit 202 to control a spraying device to spray a riboflavin solution on the machine part 108A. Examples of the spraying devices includes valves, guns, and nozzles. The cleanliness validation module 112 further causes the processing unit 202 to control the imaging device 126 to capture an image of the machine part 108A. Examples of the imaging device includes a camera, and an ultraviolet camera. The cleanliness validation module 112 further causes the processing unit 202 to receive the image of the machine part 108A from the imaging device 126.

The cleanliness validation module 112 further causes the processing unit 202 to analyze the image of the machine part 108A to determine the presence of dirt on the machine part 108A. The presence of the dirt is determined by application of the optimum version of the neural network on the received image. The cleanliness validation module 112 further causes the processing unit 202 to notify a user about the determined presence of the dirt on the machine part. The user is notified via one the plurality of human machine interfaces 120AN.

The cleanliness validation module 112 further causes the processing unit 202 to measure an amount of dirt on the machine part 108A based on the application of the optimum version of the neural network on the received image. In one example, the optimum version of the neural network determines the amount of dirt by detecting the total number of dirty spots in the received image. A dirty spot is a portion of the received image wherein presence of dirt or contaminants have been determined by the optimum version of the neural network.

The cleanliness validation module 112 further causes the processing unit 202 to the machine part 108A into one of a clean category, a partially clean category and a clean category based on the determined amount of dirt on the machine part.

The cleanliness validation module 112 further causes the processing unit 202 to initiate a cleaning process to clean the machine part 108A based on the determination that the dirt is present on the machine part 108A.

The cleanliness validation module 112 further causes the processing unit 202 to determine whether dirt is present in the machine part 108A, by application of the optimum version of the neural network on the received image. The cleanliness validation module 112 further causes the processing unit 202 to validate a cleanliness of the machine part 108A based on a determination that dirt is not present on the machine part 108A.

The communication interface 208 is configured for establishing communication sessions between the plurality of human machine interfaces 120A-N, the industrial control system 102, the spraying device 24 and the imaging device 126.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the industrial control system 102, plurality of human machine interfaces 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of the plant safety administrator module 112, such as those shown in FIG 2, in which an embodiment of the present invention can be implemented. In FIG 3, a cleanliness validation module 112 comprises a request handler module 302, a neural network remodeller module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the request to validate cleanliness of the plurality of machine parts 108A-N. For example, the request is received from one of the one or more users external to the industrial environment 100 via a network. In alternative embodiment, the request is received from the one or the plurality of human machine interfaces 120A-N via the network.

The remodeller module 304 is configured for modifying the plurality of weights to generate the plurality of versions of the neural network.

The analysis module 306 is configured for applying the plurality of versions of the neural network to generate the output parameter for each version of the plurality of versions of the neural network. The analysis module 306 is further configured to determine the optimum version of the neural network.

The modifier module 308 is configured for modifying the neural network by application of the transfer knowledge algorithm on the neural network and the optimum version of the neural network.

The engineering object database 310 is configured for generating an engineering object library comprising the plurality of fail-safe logics, information about the plurality of machine parts 108A-N.

The validation module 312 is configured to validate the cleanliness of the machine part 108A by application of the optimum version of the neural network.

The deployment module 314 is configured for deploying the neural network on the received image to validate the cleanliness of the machine part 108A.

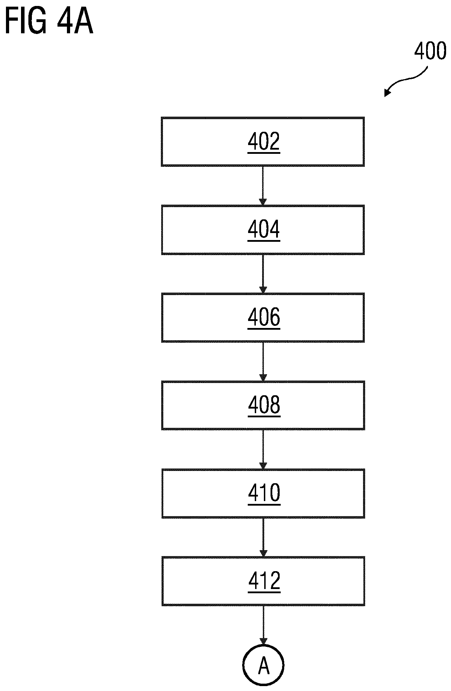

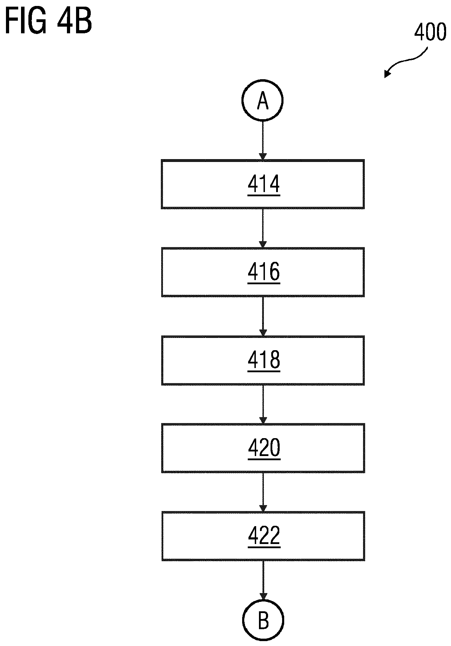

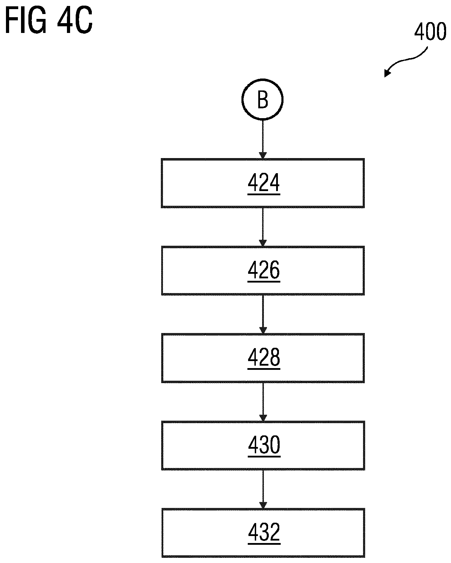

FIG 4A-C is a process flowchart illustrating an exemplary method 400 of validating cleanliness of the plurality of machine parts. according to an embodiment of the present invention. FIG. 4A-E is explained in conjunction with FIGs. 1 to 3.

At 402, the cleanliness validation module 112 causes the processing unit 202 to determine a neural network which is trained to analyze one or more images of one or more machine parts. The neural network is one of a convolutional neural network, image recognition neural network and a deep neural network. The neural network is determined from a plurality of neural networks which are stored in a memory such as the server 14 . In one example, each of the plurality of neural networks is trained to analyze images of a specific type of machine part. For example, a first neural network is trained to analyze images of a machine part such as a nozzle. Similarly, a second neural network is trained to analyze images of a machine part such as a pipe. In such a case, the processing unit 202 is configured to receive an input which indicates that a type of the one or more machine part. In a case where the type of the machine part is a nozzle, then the first neural network is determined from the plurality of neural networks. In one example, the neural network is a pattern recognition neural network configured to detect specific patterns and shapes, in the one or more images, which is indicative of dirt.

At 404, the cleanliness validation module 112 further causes the processing unit 202 to train the neural network to determine whether dirt is present on one or more machine parts based on the analysis of the one or more images. Dirt indicates presence of contaminants on the one or more machines.

Examples of contaminants include chemicals, bacterial cultures, solid waste particles, and obstructions in the one or more machine parts. The neural network is trained by receiving, by the processing unit, a training data set. The training data set is received from a data repository such as a database server.

The training data set comprises a plurality of labels and a plurality of images of the one or more machine parts. Each of the plurality of labels is indicative of whether a machine part, in a specific image of the plurality of images, has a presence of dirt. The plurality of images further comprises images of dirt, such as chemicals, bacterial cultures, solid waste particles, and obstructions in the one or more machine parts.

At 406, the cleanliness validation module 112 further causes the processing unit 202 to train the neural network by application of one of a supervised learning algorithm or an unsupervised learning algorithm on the training data set. The neural network is trained to determine presence of dirt on the one or more machine parts by analysis of the plurality of images.

In one example, the one or more images comprises the one or more machine parts. Furthermore, the neural network comprises a plurality of layers. Each of the plurality of layers comprises a plurality of weights. The plurality of layers are arranged sequentially. Each of the plurality of layers comprises a plurality of neurons.

At 410, the cleanliness validation module 112 further causes the processing unit 202 to determine a middle layer from the plurality of layers of the neural network. In one example, the middle layer is a layer which is present in a middle of the plurality of layers. The cleanliness validation module 112 further causes the processing unit 202 to determine a first layer and a second layer from the plurality of layers. The first layer is prior to the middle layer and the second layer is subsequent to the middle layer. In a case where the middle layer is an Mth layer, where M is an integer, the first layer is the (M-1)th layer and the second layer is the (M+1)th layer.

For example, in a case where the plurality of layers have 11 layers, the middle layer is the 6th layer. Furthermore the first layer is a 5th layer and the second layer is a 7th layer.

At 412, the cleanliness validation module 112 further causes the processing unit 202 to modify the plurality of weights by exchanging one or more weights of the first layer of the plurality of layers with one or more weights of the second layer of the plurality of layers. In one example, a set of weights present in a first half of the plurality of neurons in the first layer is replaced with a set of weights which are present in a second half of the plurality of neurons in the second layer of the plurality of layers. Similarly, a set of weights present in a second half of the plurality of neurons in the first layer is replaced with a set of weights which are present in a first half of the plurality of neurons in the second layer of the plurality of layers. Thus, the plurality of weights of the neural network are modified to generate a new version of the neural network.

In another example, a set of weights present in a first half of the plurality of neurons in the second layer is replaced with a set of weights which are present in a second half of the plurality of neurons in the first layer of the plurality of layers. Similarly, a set of weights present in a second half of the plurality of neurons in the second layer is replaced with a set of weights which are present in a first half of the plurality of neurons in the first layer of the plurality of layers. Thus, the plurality of weights of the neural network are modified to generate a new version of the neural network.

In yet another example, the plurality of weights of the first layer and the second layer are randomized to generate a new version of the neural network. The cleanliness validation module 112 further causes the processing unit 202 to generate a plurality of versions of the neural network based on the modification of the plurality of weights. Thus in other words, the method comprises modifying, by the processing unit, the plurality of weights of the neural network to generate a plurality of versions of the neural network. The plurality of weights associated with each version of the plurality of versions are different from each other.

At 414, the cleanliness validation module 112 further causes the processing unit 202 to apply each version of the neural network on a random test data set. The random data set is stored in a memory such as the database server. In one example, the random data set comprises the training data set. The version of the neural network processes the random test data to generate an output parameter. The output parameter is a data item generated by the version of the neural network, after processing the random dataset. In one example, the output parameter is a number of dirty spots detected by the version of the neural network, when the version of the neural network processes an image of a machine part. For example, in a case where the version detects 9 dirty spots in the image, then the output parameters is a number variable with a value 9. Other examples of the output parameter includes a time taken by the version to detect the dirty spots, a memory requirement of the version, and a value which indicates an accuracy of the version. The cleanliness validation module 112 further causes the processing unit 202 to determine the output parameter of each version of the plurality of versions based on the application of the version on the random test data set.

In one example, a user is enabled to set a threshold for the output parameter. Examples of the threshold includes a threshold for a number of dirty spots detected by the version of the neural network, a threshold for a time taken by the version to detect the dirty spots, a threshold for a memory requirement of the version, and a threshold for a value which indicates an accuracy of the version. In one example, the threshold is a threshold of number of dirty spots detected by the version. In such a case, the threshold is a numerical variable with an integer value, such as 5.

At 416, the cleanliness validation module 112 further causes the processing unit 202 to compare the determined output parameter with the user defined threshold. The cleanliness validation module 112 further causes the processing unit 202 to validate the version of the neural network based on a result of the comparison. In one example, the output parameter is indicative of a number of spots detected by the version in an image which has 9 dirty spots. In a case where the version has detected 7 dirty spots in the image, then a value of the output parameter is 7. In the example, the user has set the threshold top be 6. In such a case, the processing unit compares the output parameter to the threshold to determine that the output parameter is greater than the threshold. In the example, the processing unit validates the version of the neural network based on the determination that the output parameter is greater than the threshold.

At 418, the cleanliness validation module 112 further causes the processing unit 202 to determine an output parameter for each version of the plurality of versions based on the application of the version on the random test data set. The cleanliness validation module 112 further causes the processing unit 202 to rank the plurality of versions based on the determined output parameter for each version. In one example, the plurality of versions of the neural network are ranked in increasing order. In another example, the plurality of versions of the neural network are ranked in decreasing order.

At 420, the cleanliness validation module 112 further causes the processing unit 202 to determine a version which has the highest rank as the optimal version of the plurality of versions. In another example, the cleanliness validation module 112 further causes the processing unit 202 to determine any version of the plurality of versions of the neural network as the optimal version of the neural network.

At 422, the cleanliness validation module 112 further causes the processing unit 202 to modify the neural network based on the optimum version of the plurality of versions of the neural network by application of a transfer learning algorithm on the neural network and the optimum version of the plurality of versions of the neural network. Examples of the transfer learning algorithms include, but is not limited to a google inception model, a Microsoft Restnet model, and an Oxford VCG model transfer learning algorithm. In other words, The cleanliness validation module 112 further causes the processing unit 202 to validate each of the plurality of versions of the neural network model to determine an optimum version of the neural network.

At 424, the cleanliness validation module 112 further causes the processing unit 202 to control a spraying device to spray a riboflavin solution on the machine part 108A. Examples of the spraying devices includes valves, guns, and nozzles. The cleanliness validation module 112 further causes the processing unit 202 to control the imaging device 126 to capture an image of the machine part 108A. Examples of the imaging device includes a camera, and an ultraviolet camera. The cleanliness validation module 112 further causes the processing unit 202 to receive the image of the machine part 108A from the imaging device 126. The cleanliness validation module 112 further causes the processing unit 202 to analyze the image of the machine part 108A to determine the presence of dirt on the machine part 108A. The presence of the dirt is determined by application of the optimum version of the neural network on the received image. The cleanliness validation module 112 further causes the processing unit 202 to notify a user about the determined presence of the dirt on the machine part. The user is notified via one the plurality of human machine interfaces 120A-N.

At 426, the cleanliness validation module 112 further causes the processing unit 202 to determine an amount of dirt on the machine part 108A based on the application of the optimum version on the received image. In one example, the optimum version of the neural network determines the amount of dirt by detecting the total number of dirty spots in the received image. A dirty spot is a portion of the received image wherein presence of dirt or contaminants have been determined by the optimum version of the neural network.

At 428, the cleanliness validation module 112 further causes the processing unit 202 to the machine part 108A into one of a clean category, a partially clean category and a clean category based on the determined amount of dirt on the machine part.

At 430, the cleanliness validation module 112 further causes the processing unit 202 to initiate a cleaning process to clean the machine part 108A based on the determination that the dirt is present on the machine part 108A.

At 432, the cleanliness validation module 112 further causes the processing unit 202 to determine whether dirt is present in the machine part 108A, by application of the optimum version of the neural network on the received image. The cleanliness validation module 112 further causes the processing unit 202 to validate a cleanliness of the machine part 108A based on a determination that dirt is not present on the machine part 108A.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

1. an industrial environment 100
2. an engineering system 102
3. one or more client devices 120A-N
4. a network 104
5. plurality of hardware equipment 108A-N
6. a platform 110
7. an automation module 112
8. a server 114
9. a network interface 116
10. a database 118
11. a processor(s) 202
12. an accessible memory 204
13. a storage unit 206
14. a communication interface 208
15. an input-output unit 210
16. a network interface 212
17. a bus 214
18. an integrated development environment (IDE) 216
19. a request handler module 302,
20. an ontology generation module 304,
21. an analysis module 306,
22. a modifier module 308
23. an automation engineering object database 310
24. a validation module 312
25. a deployment module 314.

## Claims

1. A method of validating cleanliness of machine parts in an industrial plant, the method comprising:
determining, by a processing unit (202), a neural network which is trained to:
determine a presence of dirt on one or more machine parts (108A-N) based on an analysis of one or more images of the one or more machine parts (108A-N), wherein
the neural network comprises a plurality of layers, and
each of the plurality of layers comprises a plurality of weights;
modifying, by the processing unit (202), the plurality of weights of the neural network to generate a plurality of versions of the neural network, wherein the plurality of weights of each version of the plurality of versions is different from the plurality of weights of other versions of the plurality of versions of neural network;
determining, by the processing unit (202), an optimum version of the neural network based on an analysis of the plurality of versions of the neural network;
determining, by the processing unit (202), the presence of dirt on a machine part (108A), by application of the optimum version of the neural network model on an image of the machine part (108A); and
notifying, by the processing unit (202), a user about the determined presence of dirt on the machine part (108A).

2. The method according to claim 1, wherein training of the neural network comprises:
receiving, by the processing unit (202), a training data set, wherein
the training data set comprises a plurality of labels and a plurality of images of the one or more machine parts, and
each of the plurality of labels is indicative of whether a machine part, in a specific image of the plurality of images, has a presence of dirt; and
training, by the processing unit (202), the neural network by application of one of a supervised learning algorithm or an unsupervised learning algorithm on the training data set, wherein the neural network is trained to determine the presence of the dirt on the one or more machine parts by analysis of of the one or more images of the one or more machine parts.

3. The method according to any of the preceding claims, wherein modifying the plurality of weights of the neural network to generate each version of the plurality of versions of the neural network comprises:
determining, by the processing unit (202), a middle layer of the plurality of layers;
determining, by the processing unit (202), a first layer and a second layer from the plurality of layers, wherein the first layer is prior to the middle layer and the second layer is subsequent to the middle layer;
modifying, by the processing unit (202), the plurality of weights of the neural network by exchanging one or more weights of the first layer of the plurality of layers with one or more weights of the second layer of the plurality of layers; and
generating, by the processing unit (202), the version of the plurality of versions of the neural network based on the modification of the plurality of weights.

4. The method according to claim 3, further comprising:
applying, by the processing unit (202), the generated version of the neural network on a random test data set to generate an output parameter;
comparing, by the processing unit (202), the determined output parameter with a user defined threshold; and
validating, by the processing unit (202), the version of the neural network based on a result of the comparison.

5. The method according to claim 4, wherein the optimum version of the plurality of versions is determined by:
generating, by the processing unit (202), the output parameter for each version of the plurality of versions based on the application of the version on the random test data set;
ranking, by the processing unit (202), the plurality of versions based on the output parameter generated for each version of the plurality of versions; and
determining, by the processing unit (202), a version with a highest rank, among the ranked plurality of versions, as the optimum version of the plurality of versions.

6. The method according to claim 5, further comprising modifying, by the processing unit (202), the neural network based on the optimum version of the plurality of versions of the neural network by application of a transfer learning algorithm on the neural network and the optimum version of the neural network.

7. The method according to any of the preceding claims, further comprising:
measuring, by the processing unit (202), an amount of dirt on the machine part (108A) based on an application of the optimum version of the neural network on the image of the machine part (108A); and
classifying, by the processing unit (202), the machine part (108A) into one of a clean category, a partially clean category, and a dirty category based on the determined amount dirt on the machine part (108A).

8. The method according to any of the preceding claims, further comprising:
spraying, by the processing unit (202), via a spraying device 124, a riboflavin solution on the machine part (108A);
capturing, by the processing unit (202) via an imaging device (126), the image of the machine part (108A); and
receiving, by the processing unit (202), the image of the machine part (108A).

9. The method according to claim 1, further comprising initiating, by the processing unit, a cleaning process to clean the machine part (108A) based on the determination of the presence of the dirt on the machine part (108A).

10. The method according to any of the preceding claims, wherein the neural network is one of a convoluted neural network and a deep neural network.

11. An industrial control system (102) for validating cleanliness of a machine part in an industrial plant, wherein the industrial control system (102) comprises:
a processing unit (202); and
a memory (204) coupled to the processing unit (202), wherein the memory comprises a cleaning validation module (112) stored in the form of machine-readable instructions executable by the one or more processor(s), wherein the cleaning validation module (112) is capable of performing a method according to any of the claims 1-10.

12. An industrial environment (100) comprising:
an industrial control system (102) as claimed in claim 11;
a industrial plant (106) comprising one or more physical components; and
a plurality of human machine interfaces (120A-N) communicatively coupled to the industrial control system (102) via a network (104), wherein the industrial control system (102) is configured to perform a method according to any of the claims 1 to 10.

13. A computer-program product, having machine-readable instructions stored therein, that when executed by a processing unit (202), cause the processors to perform a method according to any of the claims 1-10.
